# EUROPEAN PATENT SPECIFICATION

(11) **EP 0 839 871 B1**
(45) Date of publication and mention of the grant of the patent: **19.02.2003**
(21) Application number: 97203257.7
(22) Date of filing: 20.10.1997
(51) Int. Cl.: C08L 83/04, C09D 183/04, C09G 1/16

(54) **Propellant - free lustering and protecting agent for rubber, vinyl and the like**
Treibmittelfreies Glanz- und Schutzmittel für Elastomere, Vinylpolymere und dergleichen
Agent de brillantage et protection sans gaz propulseur pour des élastomères, des polymères vinyliques et similaires

(30) Priority: 21.10.1996 US 734719; 19.09.1997 US 933894
(43) Date of publication of application: 06.05.1998
(73) Proprietor: Taiho Industries Co., Ltd., Minato-ku, Tokyo 108-0074 (JP)
(72) Inventor: Kijima, Tetsuo, Tokyo-to 194-02 (JP); Yoshikawa, Nobuhiro, Aliso Viejo, California 92656 (US); Tanaka, Toshiji, Irvine, California 92618 (US)
(74) Representative: Whitaker, Iain Mark

(56) References cited:
- EP-A- 0 268 950
- WO-A-97/22673
- CHEMICAL ABSTRACTS, vol. 111, no. 24, 11 December 1989 Columbus, Ohio, US; abstract no. 219099, XP002054041 & JP 01 175 923 A (NONAGAWA SHOJI Y. K.) 12 July 1989
- DATABASE WPI Week 8928 Derwent Publications Ltd., London, GB; AN 89-201947 XP002054043 & JP 01 139 522 A (SUNSTAR) , 1 June 1989
- CHEMICAL ABSTRACTS, vol. 122, no. 12, 20 March 1995 Columbus, Ohio, US; abstract no. 136259, XP002054042 & JP 06 192 575 A (NIPPON UNICAR ET AL.) 12 July 1994
- DATABASE WPI Week 9320 Derwent Publications Ltd., London, GB; AN 93-164727 XP002054044 & JP 05 098 215 A (NIKKA KAGAKU KOGYO) , 20 April 1993

## Description

This application is a continuation-in-part of United States Patent Application Serial No. 08/734,719, filed October 21, 1996.

### Field of the Invention

The present invention relates in general to care of rubber, vinyl, and similar surfaces, and in particular to a composition including high molecular weight linear polysiloxane preferably along with low molecular weight linear and/or cyclic siloxane to be applied to a surface such as a rubber sidewall of a vehicle tire or to a vinyl or similar surface for lustering and protecting the surface.

### Background of the Invention

Care, protection and physical appearance of certain rubber, vinyl and similar surfaces is important both to the value and longevity of the products bearing those surfaces., Of particular importance is the care, protection and appearance of vehicle components such as dashboards, door liners, and especially tires. Tires in particular must function under relatively hostile environmental conditions which can include extreme heat, extreme cold, degrading pollutant exposure including ozone, hazardous road conditions, and the like. Because of these ambient conditions, vehicle owners who take pride in the overall appearance of their vehicles must regularly attend to maintenance of that appearance.

Present vehicle care products available for lustering and protecting rubber, vinyl, and similar surfaces generally are compositions of a silicon-emulsion and silicon-oil blend in combination with a petroleum distillate solvent and chloride or fluoride carrier for application to the surface to be protected. While surface appearance immediately after application of prior art compositions Is usually acceptable, appearance quality can diminish relatively quickly and leave blotches, streaks and an otherwise dull surface.

In view of the behaviour of the above-discussed vehicle care products, it is apparent that a need is present for a lustering and protecting composition for rubber and vinyl, product surfaces where both appearance and protection is retained for a longer period of time. Accordingly, a primary object of the present invention is to provide a method for lustering and protecting a surface such as a sidewall of a vehicle tire wherein the components of the composition include a high molecular weight polysiloxane and a low molecular weight linear and/or cyclic polysiloxane to thereby achieve greater longevity and uniformity on a surface upon which the composition is applied.

Another object of the present invention is to provide a method for lustering and protecting a rubber or vinyl product surface wherein the composition used contains no petroleum distillate solvent.

These and other objects of the invention will become apparent throughout the description which now follows.

Documents such as JP-A-06192575 and JP-A-05098215 have proposed polishing compositions comprising polysiloxanes. However, these also incorporate, in the case of JP-A-06192575, di methylether and, in the case of JP-A-05098215, water as an evaporative delivery medium.

### Summary of the Invention

The present invention is a method which uses a propellant-free composition for lustering and protecting a rubber or vinyl polymer product surface. For example, a rubber sidewall of a vehicle tyre. The composition comprises:
(a) from 10 wt % to less than 100 wt % of a high molecular weight liquid polysiloxane having a molecular weight above about 550 and of the formula

   (CH₃)₂R₁SiO-(Si(CH₃)₂O)ₗ-(SiR₂CH₃O)ₘ-(Si(CH₃)₂O)ₙ-SiR₃(CH₃)₂

   wherein R1, R2 and R3 are chosen from the group consisting of hydroxy, carbinol, amino, fluorocarbon, carboxy, epoxy, phenyl, alkylene oxide, alkyl, and mixtures thereof, and wherein l=6-10,000, m = 0-1,000, and n=6-10,000; and mixtures thereof, and wherein 1=6-10,000, m = 0-1,000, and n = 6-10,000; and
(b) from greater than 0 wt. % to 90 wt. % of a low molecular weight liquid polysiloxane having a molecular weight below 550, the low molecular weight polysiloxane selected from the group consisting of a linear polysiloxane, a cyclic polysiloxane, and a mixture thereof, wherein the linear polysiloxane is defined by the formula

   (CH₃)₃SiO-((CH₃)₂SiO)ₙ-Si(CH₃)₃
where n = 0-5, and wherein the cyclic polysiloxane is defined by the formula

-((CH₃)₂SiO)ₙ-

where n = 3-6, and wherein as evaporative medium for the delivery of the high molecular weight liquid polysiloxane to said surface prior to the evaporative medium evaporating there is in the composition only the low molecular weight liquid polysiloxane.

Surface lustering and protection is accomplished by the high molecular weight formulation, while the low molecular weight formulation functions as a carrier-solvent diluent. Preferably, the composition contains between 30 wt. % to 70 wt. % of each of the high and low molecular weight formulations. The lustering and protecting formulation of the composition has a molecular weight above 550, and a preferred viscosity greater than seven cp at 25°C, and preferably from 100 to 10,000 cp. Conversely, the low molecular weight formulation of the composition has a molecular weight below 550 and a viscosity less than seven cp.

Surface activity of the formulations of the polysiloxane component Is such that the high molecular weight polysiloxane functions to produce a high luster, while the low molecular weight polysiloxane functions as an evaporative medium for delivery of the polysiloxane component to the surface and to produce an even distribution on that surface. While prior art compositions include petroleum solvents that evaporate relatively quickly, the composition of the present invention contains no such hydrocarbon solvent, but rather incorporates the low molecular weight polysiloxane, both linear and cyclic, which evaporates relatively slowly. By so doing, a mixture of high and low molecular weight polysiloxanes is allowed to actively associate with the treated surface for a longer period of time. This association promotes uniformity and longevity of mixture application, resulting in improved longevity of luster, luster uniformity, and protection from the environment.

### Detailed Description of the Preferred Embodiment

The present invention provides a composition and methodology to accomplish lustering and protection for a rubber, vinyl, plastic, or similar surface. Accordingly, rubber of a sidewall of a vehicle tire provided the rubber surface for Examples 1-6, described below. The rubber was provided as mounted strips 125 mm long and 12 mm wide, with a thickness of 2 mm.

### Example 1

A liquid composition was prepared containing 60.0 wt.% dimethylsiloxane having a viscosity of 100 cp, and 40.0 wt.% octamethyl cyclotetrasiloxane (molecular weight 296.62). The composition was placed in a pump applicator container, and a quantity of the composition sufficient to cover the described rubber surface was sprayed thereon and not wiped. The surface was analyzed as described below.

### Example 2

A liquid composition was prepared containing 60.0 wt.% functional silicone oil end-blocked with silanol having a viscosity of 100 cp, and 40.0 wt.% octamethyl cyclotetrasiloxane (molecular weight 296.62), and placed in a pump applicator container. A quantity of the composition sufficient to cover the described rubber surface was sprayed thereon and not wiped, and the surface was analyzed as described below.

### Example 3 (Not in accordance with the invention)

A liquid composition containing 100 wt.% dimethyl silicone oil having a viscosity of 1,000 cp was placed in a pump applicator container. A quantity of the composition sufficient to cover the described rubber surface was sprayed thereon and not wiped, and the surface was analyzed as described below.

### Example 4 (Not in accordance with the invention)

A liquid composition was prepared containing 80.0 wt.% dimethyl silicone oil having a viscosity of 100 cp, and 20.0 wt.% dimethyl silicone oil having a viscosity of 10,000 cp. The resulting liquid composition was placed in a pump applicator container, and a quantity of the composition sufficient to cover the described rubber surface was sprayed thereon and not wiped. The surface was analyzed as described below.

### Example 5

A liquid composition was prepared containing 35.0 wt.% dimethyl silicone oil having a viscosity of 100 cp, 5.0 wt.% dimethyl silicone oil having a viscosity of 10,000 cp, and 60.0 wt.% octamethyl trisiloxane (molecular weight 236.60). The resulting liquid composition was placed in a pump applicator container, and a quantity of the composition sufficient to cover the described rubber surface was sprayed thereon and not wiped. The surface was analyzed as described below.

### Example 6

A liquid composition was prepared containing 30.0 wt.% dimethyl silicone oil having a viscosity of 100 cp, 30.0 wt.% amino functional silicone oil having a viscosity of 100 cp, and 40.0 wt.% octamethyl cyclotetrasiloxane (molecular weight 296.62). The resulting composition was placed in a pump applicator container, and a quantity of the composition sufficient to cover the described rubber surface was sprayed thereon and not wiped. The surface was analyzed as described below.

### Analysis of Examples

Analytical results through observation revealed that the respective exemplified compositions were uniformly distributed on the respective rubber surfaces, and that the low molecular weight polysiloxanes evaporated over a period of five to ten minutes. Long term observation of the rubber confirmed that all of the surfaces developed favorable lusters without any streaking or blotching, and maintained favorable appearances with no adverse effects to the rubber. The composition of Example 4 provided the highest shine, but also was the most greasy of the compositions. The composition of Example 6 was the second most greasy and had a lesser shine than that of Example 4. The composition of Example 5 was the most preferred with respect to a favorable blotch-free, streak-free luster.

In addition to observational analysis of surface finish-appearance, comparative tests were performed to determine the effect of ozone on treated rubber. In particular, rubber strips as defined above were placed in an ozone chamber containing 200 pphm (parts per hundred million) ozone at 40°C for two hours. The strips were subjected to elongation to 125% the original length and return to original length 30 times per minute. In addition to treating respective strips with the compositions of Examples 1-6, competitive products were applied to respective strips for like analysis of ozone effects. With respect to a comparable test of products in connection with product damage due to ozone, and reported according to a subjective scale of "excellent," "good," "fair," and "poor," products of the above Examples were rated "excellent" with respect to cracking and blistering, while competing products were rated as "good," "fair," and "poor" in measuring the same parameters.

As is apparent from the results of the above Examples, compositions of the present invention not only provide aesthetic enhancement of appearances, but also address protection of structural integrity in untoward environmental conditions as represented by an' ozone atmosphere. While an illustrative and presently preferred embodiment of the invention has been described in detail herein, it is to be understood that the inventive concepts may be otherwise variously embodied and employed and that the appended claims are intended to be construed to include such variations except insofar as limited by the prior art.

## Claims

1. A method for lustering and protecting a rubber, vinyl, the method comprising:
a) providing a rubber or vinyl polymer product surface;
b) providing a propellant-free composition comprising:
(i) from 10 wt. % to less than 100 wt. % of a high molecular weight liquid polysiloxane having a molecular weight above 550 and of the formula
(CH₃)₂R₁SiO-(Si(CH₃)₂O)ₗ-(SiR₂CH₃O)ₘ-(Si(CH₃)₂O)ₙ-SiR₃(CH₃)₂
wherein R₁, and R₂ and R₃ are selected from the group consisting of hydroxy, alkanol, amino, fluorocarbon, carboxy, epoxy, phenyl, alkylene oxide, alkyl, and mixtures thereof, and wherein I = 6-10,000, m = 0-1,000, and n= 6-10,000; and
(ii) from greater than 0 wt. % to 90 wt. % of a low molecular weight liquid polysiloxane having a molecular weight below 550, the low molecular weight polysiloxane selected from the group consisting of a linear polysiloxane, a cyclic polysiloxane, and a mixture thereof, wherein the linear polysiloxane is defined by the formula
(CH₃)₃SiO-((CH₃)₂SiO)ₙ-Si(CH₃)₃
where n = 0 to 5, and wherein the cyclic polysiloxane is defined by the formula
-((CH₃)₂SiO)ₙ-
where n = 3-6; and
wherein as evaporative medium for the delivery of the high molecular weight liquid polysiloxane to said surface prior to the evaporative medium evaporating there is in the composition, only the low molecular weight liquid polysiloxane ; and
(c) applying the composition on the surface in an amount sufficient to luster and protect the surface.

2. A method as claimed in claim 1 wherein the composition has from 30 wt. % to 70 wt. % of the high molecular weight polysiloxane.

3. A method as claimed in claim 2 wherein the composition has from 30 wt. % to 70 wt. % of the low molecular weight polysiloxane.

4. A method as claimed in claim 1 wherein in the composition the low molecular weight polysiloxane is selected from the group consisting of octamethyl cyclotetrasiloxane and octamethyl trisiloxane.

5. A method as claimed in claim 1 wherein in the composition there is from 30 wt. % to 70 wt. % of the low molecular weight polysiloxane.

6. A method for lustering and protecting a rubber, vinyl, the method comprising:
a) providing a rubber or vinyl polymer product surface;
b) providing a propellant-free composition consisting of:
(i) from 10 wt. % to 100 wt. % of a high molecular weight liquid polysiloxane having a molecular weight above 550 and of the formula
(CH₃)₂R₁SiO-(Si(CH₃)₂O)ₗ-(SiR₂CH₃O)ₘ-(Si(CH₃)₂O)ₙ-SiR₃(CH₃)₂
wherein R₁ and R₂ and R₃ are selected from the group consisting of hydroxy, alkanol, amino, fluorocarbon, carboxy, epoxy, phenyl, alkylene oxide, alkyl, and mixtures thereof, and wherein I = 6-10,000, m = 0-1,000, and n= 6-10,000; and
(ii) from 0 wt. % to 90 wt. % of a low molecular weight liquid polysiloxane having a molecular weight below 550, the low molecular weight polysiloxane selected from the group consisting of a linear polysiloxane, a cyclic polysiloxane, and a mixture thereof, wherein the linear polysiloxane is defined by the formula
(CH₃)₃SiO-((CH₃)₂SiO)ₙ-Si(CH₃)₃
where n = 0 to 5, and wherein the cyclic polysiloxane is defined by the formula
-((CH₃)₂SiO)ₙ-
where n = 3-6; and
(c) applying the composition on the surface in an amount sufficient to luster and protect the surface.

## Patentansprüche

1. Verfahren zum Glänzendmachen und Schützen von Kautschuk oder Vinyl, welches Verfahren umfasst:
a) Bereitstellen einer Oberfläche eines Kautschuk- oder Vinylpolymer-Produkts;
b) Bereitstellen einer treibmittelfreien Zusammensetzung, aufweisend:
(i) 10% bis weniger als 100 Gew.% eines hochmolekularen flüssigen Polysiloxans mit einer relativen Molekülmasse von mehr als 550 und der Formel:
(CH₃)₂R₁SiO-(Si(CH₃)₂O)ₗ-(SiR₂CH₃O)ₘ-(Si(CH₃)₂O)ₙ-SiR₃(CH₃)₂
worin R₁, R₂ und R₃ ausgewählt sind aus der Gruppe, bestehend aus Hydroxy, Alkanol, Amino, Fluorkohlenstoff, Carboxy, Epoxy, Phenyl, Alkylenoxid, Alkyl und Mischungen davon, und worin sind: 1=6-10.000; m = 0-1.000 und n = 6-10.000; sowie
(ii) mehr als Null Gew.% bis 90 Gew.% eines niedermolekularen flüssigen Polysiloxans mit einer relativen Molekülmasse kleiner als 550, wobei das niedermolekulare flüssige Polysiloxan ausgewählt ist aus der Gruppe, bestehend aus einem linearen Polysiloxan, einem cyclischen Polysiloxan und einer Mischung davon, worin das Polysiloxan festgelegt ist durch die Formel:
(CH₃)₃SiO-((CH₃)₂-SiO)ₙ-Si(CH₃)₃
worin n Null bis 5 ist und worin das cyclische Polysiloxan festgelegt ist durch die Formel
-((CH₃)₂SiO)ₙ-
worin n = 3 bis 6 beträgt; und
worin es als das Mittel zum Verdampfen für die Zuführung des hochmolekularen flüssigen Polysiloxans zu der Oberfläche vor dem Verdampfen des Mittels zum Verdampfen lediglich das niedermolekulare flüssige Polysiloxan gibt; und
(c) Auftragen der Zusammensetzung auf die Oberfläche in einer Menge, die zum Glänzendmachen und Schützen der Oberfläche ausreichend ist.

2. Verfahren nach Anspruch 1, bei welchem die Zusammensetzung 30% bis 70 Gew.% des hochmolekularen Polysiloxans aufweist.

3. Verfahren nach Anspruch 2, bei welchem die Zusammensetzung 30% bis 70 Gew.% des niedermolekularen Polysiloxans aufweist

4. Verfahren nach Anspruch 1, bei welchem die Zusammensetzung des niedermolekularen Polysiloxans ausgewählt ist aus der Gruppe, bestehend aus Octamethylcyclotetrasiloxan und Octamethyltrisiloxan.

5. Verfahren nach Anspruch 1, bei welchem in der Zusammensetzung 30% bis 70 Gew.% des niedermolekularen Polysiloxans enthalten sind.

6. Verfahren zum Glänzendmachen und Schützen von Kautschuk oder Vinyl, welches Verfahren umfasst:
a) Bereitstellen einer Oberfläche eines Kautschuk- oder Vinylpolymer-Produkts;
b) Bereitstellen einer treibmittelfreien Zusammensetzung, bestehend aus:
(i) 10% bis weniger als 100 Gew.% eines hochmolekularen flussigen Polysiloxans mit einer relativen Molekülmasse von mehr als 550 und der Formel:
(CH₃)₂R₁SiO-(Si(CH₃)₂O)ₗ-(SiR₂CH₃O)ₘ-(Si(CH₃)₂O)ₙ-SiR₃(CH₃)₂
worin R₁, R₂ und R₃ ausgewählt sind aus der Gruppe, bestehend aus Hydroxy, Alkanol, Amino, Fluorkohlenstoff, Carboxy, Epoxy, Phenyl, Alkylenoxid, Alkyl und Mischungen davon, und worin sind: 1=6-10.000; m = 0-1.000 und n = 6-10.000; sowie
(ii) Null Gew.% bis 90 Gew.% eines niedermolekularen flüssigen Polysiloxans mit einer relativen Molekülmasse kleiner als 550, wobei das niedermolekulare flüssige Polysiloxan ausgewählt ist aus der Gruppe, bestehend aus einem linearen Polysiloxan, einem cyclischen Polysiloxan und einer Mischung davon, worin das Polysiloxan festgelegt ist durch die Formel:
(CH₃)₃SiO-((CH₃)₂-SiO)ₙ-Si(CH₃)₃
worin n Null bis 5 ist und worin das cyclische Polysiloxan festgelegt ist durch die Formel
-((CH₃)₂SiO)ₙ-
worin n = 3 bis 6 beträgt; und
(c) Auftragen der Zusammensetzung auf die Oberfläche in einer Menge, die zum Glänzendmachen und Schützen der Oberfläche ausreichend ist.

## Revendications

1. Procédé pour le lustrage et la protection d'un caoutchouc, d'un vinyle, le procédé comprenant:
a) la fourniture d'une surface de produit d'un caoutchouc ou d'un polymère de vinyle;
b) la fourniture d'une composition sans propulseur comprenant:
(i) de 10% en poids à moins de 100% en poids d'un polysiloxane liquide à haut poids moléculaire possédant un poids moléculaire au-dessus de 550 et de la formule:
(CH₃)₂R₁SiO-(Si(CH₃)₂O)ₗ-(SiR₂CH₃O)ₘ-(Si(CH₃)₂O)ₙ-SiR₃(CH₃)₂
dans laquelle R₁ et R₂ et R₃ sont choisis dans le groupe constitué d'un groupe hydroxyle, alcanol, amino, fluorocarbone, carboxy, époxy, phényle, oxyde d'alkylène, alkyle et de mélanges de ceux-ci et dans laquelle 1 = 6-10.000, m = 0-1.000 et n = 6-10.000; et
(ii) de plus de 0% en poids à 90% en poids d'un polysiloxane liquide à bas poids moléculaire possédant un poids moléculaire au-dessous de 550, le polysiloxane à bas poids moléculaire étant choisi dans le groupe constitué d'un polysiloxane linéaire; d'un polysiloxane cyclique et d'un mélange de ceux-ci, dans lequel le polysiloxane linéaire est défini par la formule:
(CH₃)₃SiO-((CH₃)₂-SiO)ₙ-Si(CH₃)₃
dans laquelle n = 0 à 5, et dans lequel le polysiloxane cyclique est défini par la formule:
-((CH₃)₂SiO)ₙ-
dans laquelle n = 3-6; et
dans lequel, en tant que milieu d'évaporation pour la libération du polysiloxane liquide à haut poids moléculaire sur ladite surface avant l'évaporation du milieu d'évaporation, il y a dans la composition seulement le polysiloxane liquide à bas poids moléculaire; et
c) l'application de la composition sur la surface dans une quantité suffisante pour lustrer et protéger la surface.

2. Procédé suivant la revendication 1, dans lequel la composition contient de 30% en poids à 70% en poids du polysiloxane à haut poids moléculaire.

3. Procédé suivant la revendication 2, dans lequel la composition contient de 30% en poids à 70% en poids du polysiloxane à bas poids moléculaire.

4. Procédé suivant la revendication 1, dans lequel, dans la composition, le polysiloxane à bas poids moléculaire est choisi dans le groupe constitué d'octaméthylcyclotétrasiloxane et d'octaméthyltrisiloxane.

5. Procédé suivant la revendication 1, dans lequel, dans la composition, il y a de 30% en poids à 70% en poids du polysiloxane à bas poids moléculaire.

6. Procédé pour le lustrage et la protection d'un caoutchouc, d'un vinyle, le procédé comprenant:
a) la fourniture d'une surface de produit d'un caoutchouc ou d'un polymère de vinyle;
b) la fourniture d'une composition sans propulseur comprenant:
(i) de 10% en poids à 100% en poids d'un polysiloxane liquide à haut poids moléculaire possédant un poids moléculaire au-dessus de 550 et de la formule:
(CH₃)₂R₁SiO-(Si(CH₃)₂O)ₗ-(SiR₂CH₃O)ₘ-(Si(CH₃)₂O)ₙ-SiR₃(CH₃)₂
dans laquelle R₁ et R₂ et R₃ sont choisis dans le groupe constitué d'un groupe hydroxyle, alcanol, amino, fluorocarbone, carboxy, époxy, phényle, oxyde d'alkylène, alkyle et de mélanges de ceux-ci et dans laquelle 1 = 6-10.000, m = 0-1.000 et n = 6-10.000; et
(ii) de 0% en poids à 90% en poids d'un polysiloxane liquide à bas poids moléculaire possédant un poids moléculaire au-dessous de 550, le polysiloxane à bas poids moléculaire étant choisi dans le groupe constitué d'un polysiloxane linéaire, d'un polysiloxane cyclique et d'un mélange de ceux-ci, dans lequel le polysiloxane linéaire est défini par la formule:
(CH₃)₃SiO-((CH₃)₂-SiO)ₙ-Si(CH₃)₃
dans laquelle n = 0 à 5, et dans lequel le polysiloxane cyclique est défini par la formule:
-((CH₃)₂SiO)ₙ-
dans laquelle n = 3-6; et
c) l'application de la composition sur la surface dans une quantité suffisante pour lustrer et protéger la surface.
